Europäisches Patentamt

European Patent Office

Office européen des brevets

(19)

(11) Publication number: **0 270 689**
**A1**

(12) # EUROPEAN PATENT APPLICATION

published in accordance with Art. 158(3) EPC

(21) Application number: 87904096.2

(22) Date of filing: 18.06.87

Data of the international appli-
cation taken as a basis:

(86) International application number:
PCT/JP 87/00399

(87) International publication number:
WO 87/07989 (30.12.87 87/29)

(51) Int. Cl.⁴: **H 02 P 7/63**

(30) Priority: 18.06.86 JP 142492/86

(43) Date of publication of application: 15.06.88
Bulletin 88/24

(84) Designated Contracting States: DE FR GB

(71) Applicant: FANUC LTD, 3580, Shibokusa Aza-Komanba
Oshino-mura, Minamitsuru-gun Yamanashi 401-05 (JP)

(72) Inventor: FUJIOKA, Yoshiki,
Greentown 3-30, 1293-10 Tatsuno 3-chome,
Higashiyamato-shi Tokyo 189 (JP)

(74) Representative: Billington, Lawrence Emlyn et al,
HASELTINE LAKE & CO Hazlitt House 28 Southampton
Buildings Chancery Lane, London WC2A 1AT (GB)

(54) **THREE-PHASE AC MOTOR CONTROLLER.**

(57) This invention employs static induction-type transistors
(SIT) as inverter circuit control elements for a powering circuit
and a regeneration circuit of an AC motor. Full-wave rectifier
circuits are constituted during powering and regeneration by
utilizing free-wheel diodes (D) connected across the source
and the drain of the static induction-type transistors. The static
induction-type transistors (SIT$_1$ to SIT$_6$), (SIT'$_1$ to SIT'$_6$) that
constitute an inverter of the powering circuit and the regenera-
tion circuit for the AC motor, and the free-wheel diodes (D$_1$ to
D$_6$), (D'$_1$ to D'$_6$) are used in pairs in the form of a module. If an
inverter is constituted by using a plurality of modules, an inver-
ter package can be easily realized. High-frequency noise is
prevented from leaking into the power source side by provi-
ding at the inlet of the power source a high-frequency noise
leakage preventing circuit which comprises high-frequency
noise removing capacitors (C$_1$ to C$_3$), high-frequency noise re-
moving line reactors (ACR), and high-frequency noise remov-
ing zero-phase reactor (ZPR) that are connected in each
phase of the three-phase AC power source.

-1-

## DESCRIPTION

### THREE-PHASE AC MOTOR CONTROL APPARATUS

### Technical Field

This invention relates to a three-phase AC motor control apparatus in which static induction transistors are used in a circuit for performing motor drive control and regenerative control.

### Background Art

There are cases where an induction motor, which is a form of AC motor, involves a load torque which changes between positive and negative, as when acceleration and deceleration are frequently repeated owing to the load characteristics of the device using the motor, and when driving a hoist, by way of example.

When such a violently changing load is to be driven, the practice recently is to employ a system in which commercial AC power is converted into direct current by a rectifier, the direct current is converted into alternating current of a desired frequency by an inverter, and the induction motor is driven by this alternating current. In a motor drive control circuit consituting such a system, various control means are used as means for dealing with rotational energy at the time of deceleration. A regenerative control device is employed most widely as electrical braking means.

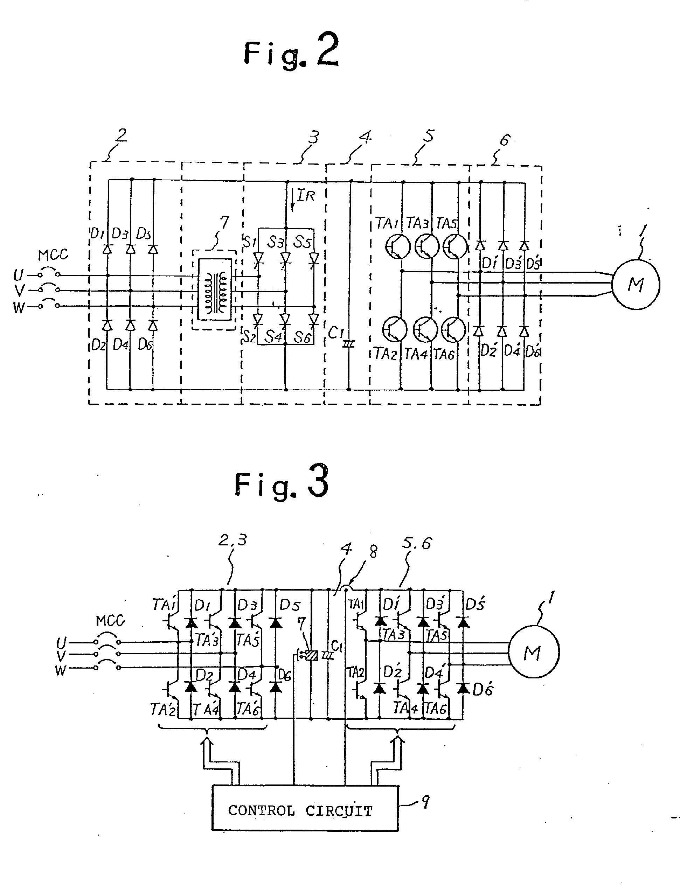

Fig. 2 is a circuit diagram illustrating a regenerative circuit, which relies upon a thyristor bridge, arranged for controlling a three-phase induction motor using a voltage-type inverter.

In the Figure, a full-wave rectifier 2 is constituted by diodes $D_1$ - $D_6$. A voltage which has been converted into a direct current is supplied to a transistor inverter 5, constituted by transistors $TA_1$ - $TA_6$, through a smoothing circuit 4 having a capacitor $C_1$. A signal having a prescribed voltage and frequency is applied to a three-phase induction motor 1 by control of the transistor inverter 5, whereby the motor is run at a prescribed velocity.

In the case of regenerative control, the induced voltage of the induction motor 1 is converted into direct current by a full-wave rectifier 6 composed of diodes $D_1'$ - $D_6'$, the direct current is passed through the smoothing circuit 4 and is fed back to an AC power source U, V, W through a regenerative circuit 3 constituted by a thyristor bridge $S_1$ - $S_6$. A step-up transformer 7 is provided between the thyristor bridge $S_1$ - $S_6$ and AC power source U, V, W. It is arranged so that an interval occurs during which the AC power supply voltage is higher than the voltage on the DC side, so that regenerative operation will take place smoothly and the thyristors $S_1$ - $S_6$ will commute without fail. The regenerative circuit 3 constituted by the thyristor bridge $S_1$ - $S_6$ and the transistor inverter 5 are driven by signals from a control circuit, not shown, and subject the three-phase induction motor 1 to drive control and regenerative control.

Fig. 3 is a circuit diagram in which an inverter comprising transistors is used in place of the thyristor inverter of the regenerative circuit 3 shown in Fig. 2, and in which the diodes constituting the full-wave rectifiers 2, 6 are freewheel diodes connected to the transistors. In Fig. 3, numeral 7 denotes a voltage sensor for sensing DC voltage, and numeral 8 designates a current sensor for measuring direct current. In this case also regenerative control can be performed by controlling transistors $TA_1'$ - $TA_6'$ and $TA_1$ - $TA_6$ by signals from a control circuit 9. It should be noted that the applicant filed an application (Japanese Patent Application No. 61-057900) for an invention of this kind with the Japanese Patent Office on March 15, 1986.

An example is also known in which a thyristors are used as the inverter 5.

Thus, in a case where switching elements such as transistors or thyristors are used in the inverter of the motor drive circuit and in the regenerative circuit, a complicated control circuit for forming the turn-on and turn-off signals of these switching elements is required.

In addition, when the thyristor bridge or transistor inverter is operated, high-frequency noise is produced that adversely affects the other devices. There is also a drop in the power-factor of the circuit.

The present invention has been devised to solve the various problems possessed by the prior art and its object is to provide a compact three-phase AC motor control apparatus capable of executing drive and regenerative control of a three-phase AC motor even with a low-power, simple control circuit.

Another object of the present invention is to provide a three-phase AC motor control apparatus in which high-frequency noise produced when a chopping action is performed in each inverter will not leak from the three-phase motor control apparatus.

Disclosure of the Invention

In order to improve upon the drawbacks of the prior art set forth above, the present invention provides a three-phase AC motor control apparatus having an inverter for controlling drive of an AC motor, and an inverter for regenerative braking, wherein a high-frequency noise leakage prevention circuit is provided on the power supply side, the apparatus comprising: a high-frequency noise leakage prevention circuit comprising high-frequency noise removal capacitors connected between phases of the power supply, line reactors for high-frequency noise removal, and a zero-phase-sequence reactor for high-frequency noise removal; an inverter for regenerative braking provided downstream of the high-fequency noise leakage prevention circuit and composed of a static induction transistor; a full-wave rectifier for commercial power rectification composed of a diode, which serves also as a freewheel diode, connected between a source and drain of the static induction transistor constituting the inverter for regenerative braking; an inverter for AC motor drive provided downstream of the inverter for regenerative braking and composed of a static induction transistor; a full-wave rectifier for rectifying induced electromotive force of an AC motor and composed of a diode, which serves also as a freewheel diode, connected between a source and drain of a static induction transistor constituting the inverter for AC motor drive; and an AC motor driven by the inverter for AC motor drive. Further, there is provided a three-phase AC motor control apparatus further comprising a braking energy absorption circuit provided between the inverter for regenerative braking and the inverter for AC motor drive.

## Brief Description of the Drawings

Fig. 1 is a circuit diagram illustrating a three-phase AC motor control apparatus according to the present invention, and Figs. 2 and 3 are circuit diagrams of examples of the prior art.

## Best Mode for Carrying Out the Invention

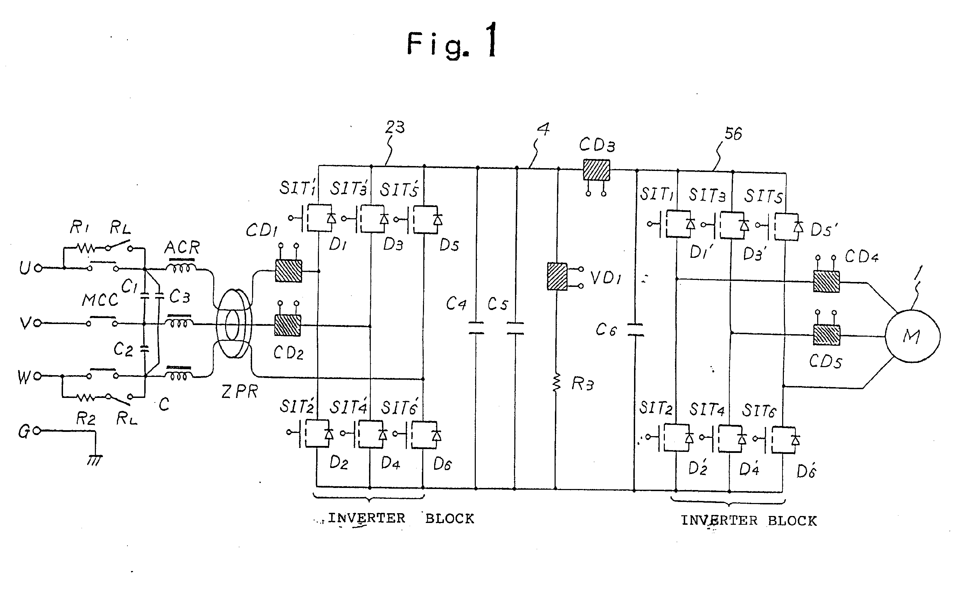

An embodiment of the present invention will now be described with reference to the drawings. Fig. 1 is a circuit diagram illustrating a three-phase AC motor control apparatus according to the present invention. As will be understood from Fig. 1, static induction transistors (hereafter referred to as SIT) $SIT_1'$ - $SIT_6'$ and $SIT_1$ - $SIT_6$ are used in place of the thyristor elements of the regenerative circuit 3 and the transistors $TA_1'$ - $TA_6'$ and $TA_1$ - $TA_6$ of the inverter 5, which are shown in Fig. 3.

More specifically, each SIT has properties similar to those of a triode whose drain voltage - drain current characteristic does not saturate and is capable of voltage control in which a turn-on, turn-off switching action is performed in dependence upon an applied voltage. Accordingly, switching control can be performed in a simple manner at low power. From the viewpoint of internal resistance, loss within the SIT is less than that of a bipolar transistor, and the SIT possesses a negative resistance temperature characteristic in addition to high-output, high-speed and low-noise characteristics. Furthermore, freewheel diodes $D_1$ - $D_6$ and $D_1'$ - $D_6'$ employ gold diffusion-type high-speed diodes. As a result, the main circuit is made more compact and the control circuit is made more simple than in the conventional case shown in Fig. 3, in which the drive and regenerative control circuits are constructed by combining the power transistors $TA_1'$ - $TA_6'$ and freewheel diodes $D_1$ - $D_6$ as well as the power transistors $TA_1$ - $TA_6$ and freewheel diodes $D_1'$ - $D_6'$.

As will be understood from Fig. 1, the SITs and freewheel diodes are arranged in pairs, a full-wave rectifier on the drive side and an inverter block 23 on the regeneration side are constructed by $SIT_1' - SIT_6'$ and freewheel diodes $D_1 - D_6$, and an inverter block 56 on the drive side is constructed by $SIT_1 - SIT_6$ and freewheel diodes $D_1' - D_6'$. Though not shown in Fig. 1, a control device usually is provided for forming drive signals applied to the gates of the SITs constituting the inverter block 23 and inverter block 56. The control device has an output smaller than that of a control device constituted by thyristors or bipolar transistors for controlling an induction motor having the same rating. Since a well-known circuit is used for this device, a description thereof is omitted.

The inverter blocks 23 and 56 can be constructed to be structurally identical.

Capacitors $C_1 - C_3$ for high-frequency noise removal are delta-connected between phases of an AC power supply U, V, W. Line reactors ACR for high-frequency noise removal are connected, in series with the respective phases, to the load side of the capacitors $C_1 - C_3$. A zero-phase-sequence reactor ZPR for high-frequency noise removal is provided on the load side of the line reactors ACR. The capacitors $C_1 - C_3$ for high-frequency noise removal, the line reactors ACR for high-frequency noise removal, and the zero-phase-sequence reactor ZPR for high-frequency noise removal construct a high-frequency noise leakage prevention circuit.

A main circuit switch MCC for switching the power supply on and off with respect to the three-phase AC motor control apparatus of the present invention is connected to the AC power supply U, V, W. A series circuit comprising a resistor $R_1$ and a relay contact $R_L$ is provided in parallel with the contacts of the U phase of the main circuit switch MCC, and a series circuit comprising a resistor $R_2$ and a relay contact $R_L$ is provided in parallel with the contacts of the W phase of the main circuit switch MCC. These resistors $R_1$, $R_2$ mitigate a rush current that flows into a smoothing capacitor $C_4$, described below, when power is introduced.

$CD_1$, $CD_2$ represent current sensors for controlling regenerative current, $CD_3$ denotes a current sensor for sensing a current that flows through a DC link section, and $CD_4$, $CD_5$ designate current sensors for controlling drive current. The output signals of these sensors are inputted to a control circuit, not shown, whereby $SIT_1'$ - $SIT_6'$ and $SIT_1$ - $SIT_6$ are controlled to effect prescribed drive control and regenerative control.

$C_4$ represents a smoothing capacitor, $C_5$, $C_6$ denote surge absorbing capacitors of the SITs, and $VD_1$ is a voltage sensor for the DC link section. Regenerative control is executed when the voltage sensed by the voltage sensor $VD_1$ is higher than the voltage on the AC

side. $R_3$ denotes a resistor for discharge of the capacitors $C_4 - C_6$.

The operation of the three-phase AC motor control apparatus according to the invention will now be described.

In a case where the induction motor 1 is to be driven into operation when the motor is not rotating, the relay contacts $R_L$ are closed upon confirming that the induction motor 1 is at rest, as by checking whether the output voltage of the voltage sensor $VD_1$ is zero. In response to this operation, the group of freewheel diodes of the inverter block 23 are connected to the power supply side via the resistors $R_1$, $R_2$. As a result, the commercial power is rectified and converted into direct current, which mainly flows into the capacitor $C_4$. However, a large current does not flow into the capacitor $C_4$ owing to the resistors $R_1$ and $R_2$. The main circuit switch MCC is closed, thereby connecting the inverter block 23 fully to the power supply side, when the terminal voltage of the voltage sensor $VD_1$ attains a predetermined value, preferably about 80% of the rated voltage. Control signals from the control device, which is not illustrated, are applied to the SITs of the inverter block 56, so that the direct current obtained by rectification performed by the freewheel diodes of the inverter block 23 is converted into an alternating current having a desired frequency. The alternating current is applied to the induction motor 1, which consequently starts being rotated at a prescribed rotational speed. It should be noted that the relay contacts $R_L$ open at the same time that the main circuit switch MCC closes.

If the rotational speed and the direction of rotation of the induction motor 1 are to be varied, the frequency of the control signals applied to the inverter block 56 are varied and the control signals are so controlled as to vary the phase rotating direction of the induction motor drive power supply.

If the induction motor is to be halted, the control signals being impressed upon the inverter block 56 are stopped, as a result of which the supply of power to the induction motor 1 is terminated. However, the rotary shaft of the induction motor 1 rotates due to inertia. In consequence, an induced electromotive force is produced in the induction motor 1, rectified by the freewheel diodes $D_1' - D_6'$ of the inverter block 56 and consumed by the resistor $R_3$. A load therefore acts upon the induction motor 1 and a braking force is applied to the rotary shaft of the induction motor. If the rotational energy of the induction motor 1 is excessive and is sensed by the voltage sensor $VD_1$ to be larger than the rectified voltage on the power supply side, then control signals from the control device, not shown, are delivered to the SITs $(SIT_1' - SIT_6')$ of the inverter block 23. Power generated in the induction motor 1 is converted into the commercial power supply frequency by the inverter block 23 and fed back to the power supply side, whereby regenerative braking is applied to the induction motor 1 to rapidly bring the motor to rest. It should be noted that when the SITs of the inverter blocks 23, 56 are acting as inverters, these elements generate high-frequency noise. However, the noise is blocked by the capacitors $C_1$ - $C_3$ for high-frequency noise removal, the line reactors ACR for high-frequency noise removal, and the zero-phase-sequence reactor ZPR for high-frequency noise removal, so that leakage of the noise in the direction of the commercial power supply is prevented.

Industrial Applicability

The present invention can be used as a control apparatus for a three-phase synchronous motor and not just as a control apparatus for a three-phase induction motor. With a minor modification, the invention can also be used as a control apparatus for a two-phase AC motor.

CLAIMS:

1.   A three-phase AC motor control apparatus having an inverter for controlling drive of an AC motor, and an inverter for regenerative braking, wherein a high-frequency noise leakage prevention circuit is provided on the power supply side, the apparatus comprising:

a high-frequency noise leakage prevention circuit comprising high-frequency noise removal capacitors connected between phases of the power supply, line reactors for high-frequency noise removal, and a zero-phase-sequence reactor for high-frequency noise removal;

an inverter for regenerative braking provided downstream of the high-fequency noise leakage prevention circuit and composed of a static induction transistor;

a full-wave rectifier for commercial power rectification composed of a diode, which serves also as a freewheel diode, connected between a source and drain of the static induction transistor constituting said inverter for regenerative braking;

an inverter for AC motor drive provided downstream of the inverter for regenerative braking and composed of a static induction transistor;

a full-wave rectifier for rectifying induced electromotive force of an AC motor and composed of a diode, which serves also as a freewheel diode, connected between a source and drain of a static induction transistor constituting said inverter for AC motor drive; and

an AC motor driven by the inverter for AC motor drive.

2.   A three-phase AC motor control apparatus according to claim 1, characterized in that an inverter block is constructed by using plural unit combinations of a static induction transistor and a diode, which serves also as a freewheel diode, connected between a source and drain of the static induction transistor.

3.   A three-phase AC motor control apparatus according to claim 1, characterized in that an inverter block for regenerative braking and an inverter block for AC motor drive are identically constructed.

4.   A three-phase AC motor control apparatus according to claim 1, characterized in that the AC motor driven by the inverter for AC motor drive is an induction motor.

5.   A three-phase AC motor control apparatus according to claim 1, characterized in that the AC motor driven by the inverter for AC motor drive is a synchronous motor.

6.   A three-phase AC motor control apparatus having an inverter for controlling drive of an AC motor, and an inverter for regenerative braking, wherein a high-frequency noise leakage prevention circuit is provided on the power supply side, the apparatus comprising:

a high-frequency noise leakage prevention circuit comprising high-frequency noise removal capacitors connected between phases of the power supply, line reactors for high-frequency noise removal, and a zero-phase-sequence reactor for high-frequency noise removal;

an inverter for regenerative braking provided downstream of the high-fequency noise leakage prevention circuit and composed of a static induction transistor;

a full-wave rectifier for commercial power rectification composed of a diode, which serves also as a freewheel diode, connected between a source and drain of the static induction transistor constituting said inverter for regenerative braking;

an inverter for AC motor drive provided downstream of the inverter for regenerative braking and composed of a static induction transistor;

a full-wave rectifier for rectifying induced electromotive force of an AC motor and composed of a diode, which serves also as a freewheel diode, connected between a source and drain of a static induction transistor constituting said inverter for AC motor drive;

an AC motor driven by the inverter for AC motor drive; and

a braking energy absorption circuit provided

-15-

between the inverter for regenerative braking and the inverter for AC motor drive.

7. A three-phase AC motor control apparatus according to claim 6, characterized in that the braking energy absorption circuit includes a capacitor.

8. A three-phase AC motor control apparatus according to claim 7, characterized in that a resistor for preventing a rush current from flowing into the capacitor of the braking energy absorption circuit is provided on the power supply side.

# Fig. 1

# Fig. 2

# Fig. 3

CONTROL CIRCUIT

# INTERNATIONAL SEARCH REPORT  00270689

International Application No | PCT/JP87/00399

## I. CLASSIFICATION OF SUBJECT MATTER (if several classification symbols apply, indicate all) 3

According to International Patent Classification (IPC) or to both National Classification and IPC

Int.Cl$^4$    H02P7/63

## II. FIELDS SEARCHED

### Minimum Documentation Searched 4

| Classification System | Classification Symbols |
|---|---|
| IPC | H02M7/5387, H02P3/18, 5/41, 7/63 |

Documentation Searched other than Minimum Documentation
to the Extent that such Documents are Included in the Fields Searched 5

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, A, 57-71277 (Toshiba Corp.) 4 May 1982 (04. 05. 82) Fig. 2 (Family: none) | 1-7 |
| Y | JP, A, 60-9384 (Yasukawa Electric Mfg. Co., Ltd.) 18 January 1985 (18. 01. 85) Page 3, lower right column (Family: none) | 1-7 |
| Y | JP, A, 60-171821 (Fanuc Ltd.) 5 September 1985 (05. 09. 85) & WO, A, 8503813 | 1, 6 |
| X | JP, U, 50-118437 (Meidensha Electric Mfg. Co., Ltd.) 27 September 1975 (27. 09. 75) (Family: none) | 8 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| September 1, 1987 (01. 09. 87) | September 14, 1987 (14. 09. 87) |

| International Searching Authority 1 | Signature of Authorized Officer 20 |
|---|---|
| Japanese Patent Office | |

Form PCT/ISA/210 (second sheet) (October 1977)